# EUROPEAN PATENT APPLICATION

(11) **EP 1 806 554 A1**
(43) Date of publication of application: **11.07.2007**
(21) Application number: 05788265.6
(22) Date of filing: 30.09.2005
(51) Int. Cl.: F28F 9/02, F16L 39/00, F25B 41/00

(54) **STRUCTURE AND METHOD FOR CONNECTING PIPE OF HEAT EXCHANGER**

(30) Priority: 12.10.2004 JP 2004297690
(71) Applicant: Calsonic Kansei Corporation, Tokyo 164-8602 (JP)
(72) Inventor: ITO, Osamu, c/o Calsonic Kansei Corporation, Tokio 164-8602 (JP); WATANABE, Toshiharu, c/o Calsonic Kansei, Tokio 164-8602 (JP); SUEMATSU, Nobuyasu, c/o Calsonic Kansei, Tokio 164-8602 (JP); TOMINAGA, Yasutaka, c/o Nissan Motor Co., Ltd, Kanagawa 243-0192 (JP)
(74) Representative: Grünecker, Kinkeldey, Stockmair & Schwanhäusser Anwaltssozietät
(86) International application number: PCT/JP2005/018126
(87) International publication number: WO 2006/040947

(57) **Abstract**

Second pipes (2Ha to 2Hf) for circulating a fluid are respectively connected to a plurality of first pipes (1Ha to 1Hd) formed in a heat exchanger (R) or to a plurality of first pipes (1Ha to 1Hf) formed in and around the heat exchanger (R). Groups (A to C) formed by arranging the first pipes (1Ha to 1Hf) in units of specified quantities (including a single pipe) along a vertical direction are formed in the state of being not overlapped with each other in a lateral direction of a vehicle.

## Description

### Technical Field

The present invention relates to a structure and a method for connecting pipes of a heat exchanger.

### Background Art

When connecting a plurality of first pipes formed in and around a heat exchanger to corresponding second pipes, it is a lot of labor to connect the pipes one by one. For this reason, there is known a structure for connecting a set of pipes configured to hold and assemble a plurality of first pipes and second pipes respectively on block-shaped jigs and to connect the plurality of first pipes and second pipes collectively by coupling the jigs together (see Patent Document: Japanese Unexamined Patent Application Publication No. Hei 5(1993)-164260, for example).

### Disclosure of the Invention

However, this conventional technique is configured to leave the block-shaped jigs after connecting the first pipes to the second pipes and therefore may complicate the structure around the heat exchanger and may cause a weight increase.

The present invention has been made to solve the above-mentioned problems of the conventional technique and an object thereof is to provide a structure and a method for connecting pipes of a heat exchanger configured not to leave jigs after connection.

To attain the object, a first aspect of the present invention provides a structure for connecting pipes of a heat exchanger. The structure includes a heat exchanger, a plurality of first pipes formed in the heat exchanger or in and around the heat exchanger and arranged along a vertical direction in units of specified quantities to constitute respective groups, and second pipes connected to the first pipes and configured to circulate a fluid. Here, the groups are formed not to be overlapped with each other in a lateral direction of a vehicle.

According to the first aspect of the present invention, the first pipes formed in the heat exchanger (and in the vicinity thereof) are arranged along the vertical direction in each group. Therefore, it is possible to apply a pair of jigs, which include guide grooves formed from low ends upward, respectively to the first pipes side and to the second pipes side.

Accordingly, by coupling the jigs together in an anteroposterior direction in the state of holding the respective pipes in the guide grooves of the jigs, it is possible to connect the first pipes to the corresponding second pipes and to remove the jigs after connection by pulling the jigs upward. As a result, no jigs are left around the heat exchanger.

Moreover, the upper first pipe among the first pipes mutually adjacent to one another in each of the groups may be located within a diametrical width range of the lower first pipe in the lateral direction of a vehicle.

According to this configuration, the upper first pipe among the first pipes mutually adjacent to one another in each of the groups is located within the diametrical width range of the lower first pipe. Therefore, it is not necessary to arrange the pipes strictly linearly in the vertical direction.
The structure may further include a first jig and a second jig to be coupled together, which are used at the time of connecting the pipes of the heat exchanger and are removed after connecting the pipes. The first and second jigs may include first and second guide grooves being formed upward from low ends thereof and corresponding to the first and second pipes of each of the groups.

According to this configuration, it is possible to connect the second pipes to the corresponding first pipes by coupling the jigs together in the anteroposterior direction in the state of holding the tubes inside the respective guide grooves of the jigs, and to remove the jigs by pulling the jigs upward after connection. Therefore, no jigs are left around the heat exchanger.

To attain the above-mentioned object, a second aspect of the present invention provides a method for connecting pipes of a heat exchanger configured to connect a plurality of first pipes formed in a heat exchanger or in and around the heat exchanger respectively to second pipes for circulating a fluid. The method for connecting the pipes which includes the steps of: forming groups of the first pipes arranged along a vertical direction in units of specified quantities in the state of being not overlapped with each other in a lateral direction of a vehicle; forming upward first guide grooves corresponding to the first pipes of each of the groups from low ends of a pair of first jigs separated in the lateral direction of the vehicle, and forming backward any of locating pins and locating holes on the first jigs; forming upward second guide grooves corresponding to the second pipes of each of the groups from low ends of a pair of second jigs separated in the lateral direction of the vehicle, and forming the counterparts of any of the locating pins and the locating holes on the second jigs; and connecting the second pipes to the first pipes by holding the first pipes of the corresponding group inside the first guide grooves in an internally contacting manner while holding the second pipes of the corresponding group inside the second guide grooves in an internally contacting manner, and then by coupling the second jigs with the first jigs in an anteroposterior direction while inserting the locating pins into the locating holes.

According to the second aspect of the present invention, it is possible to perform positional adjustment of the first pipes and the second pipes in a vertical direction inside the guide grooves formed along the vertical direction. Moreover, since the first jigs and the second jigs are each formed into the pair structures separated in the lateral direction of a vehicle, it is easy to absorb positional irregularity among the first pipes and the second pipes.

The step of forming groups may include a step of locating the upper first pipe among the first pipes mutually adjacent to one another in each of the groups within a diametrical width range of the lower first pipe in the lateral direction of a vehicle.

According to this method, since the adjacent upper first pipe is located within the diametrical width range of the lower first pipe in each of the groups, it is not necessary to arrange the pipes strictly linearly.

Meanwhile, the method may further include a step of providing a first restricting means between the first jig and the first pipes for restricting movement of the first pipes relative to the first jig at least in the opposite direction to the second jig.

According to this method, since the first restricting means is provided between the first jig and the first pipes, the first pipes do not cause displacement relative to the first jig in the opposite direction to the coupling direction when coupling the second jig to the first jig in the anteroposterior direction. Accordingly, it is possible to connect the second pipes securely to the first pipes.

Meanwhile, the method may further include a step of providing a second restricting means between the second jig and the second pipes for restricting movement of the second pipes relative to the second jig at least in the opposite direction to the first jig.

According to this method, since the second restricting means is provided between the second jig and the second pipes, the second pipes do not cause displacement relative to the second jig in the opposite direction to the coupling direction when coupling the second jig to the first jig in the anteroposterior direction. Accordingly, it is possible to connect the second pipes securely to the first pipes.

The method may further include a step of providing stopper a means for maintaining a connected state of the first pipes and the second pipes on the second guide grooves to be set below the corresponding second pipes.

According to this method, the stopper means is set on the second guide groove of the second jig so that the stopper means maintains the connected state of the first pipes and the second pipes after connecting the first pipes to the second pipes. Therefore, it is easy to perform connecting work.

It is also possible to execute a step of detaching the first jigs and the second jigs from the first pipes and the second pipes by pulling the jigs upward in the state of coupling in the anteroposterior direction after the step of connecting the second pipes to the first pipes.

According to this method, since the jigs are not left after connecting the first pipes to the second pipes, it is possible to simplify the structures around the heat exchanger and to avoid occurrence of an increase in the weight attributable to the jigs.

### Brief Description of the Drawings

[Figure 1] Fig. 1 is an exploded perspective view showing a radiator and various pipes according to an embodiment of the present invention.
[Figure 2] Fig. 2 is a schematic rear view showing the radiator and the various pipes in Fig. 1 and jigs.
[Figure 3] Fig. 3 is a perspective view showing a state of setting first jigs shown in Fig. 2 to first pipes shown in Fig. 1.
[Figure 4] Fig. 4 is a perspective view showing a state of setting second jigs to second pipes shown in Fig. 1.
[Figure 5] Fig. 5 is a cross-sectional view showing a state before connecting a thin first pipe shown in Fig. 1 to a second pipe.
[Figure 6] Fig. 6 is a cross-sectional view showing a state after connecting the thin first pipe shown in Fig. 1 to the second pipe.
[Figure 7] Fig. 7 is a cross-sectional view showing a state before connecting a thick first pipe shown in Fig. 1 to a second pipe.
[Figure 8] Fig. 8 is a cross-sectional view showing a state after connecting the thick first pipe shown in Fig. 1 to the second pipe.
[Figure 9] Fig. 9 is an enlarged view showing a portion indicated with an arrow DA in Fig. 4.
[Figure 10] Fig. 10 is an explanatory view showing a state of supporting a second pipe from a lower side by use of a stopper body shown in Fig. 9.
[Figure 11] Fig. 11 is an enlarged view showing a portion indicated with an arrow DB in Fig. 4.
[Figure 12] Fig. 12 is a cross-sectional view taken along an SA-SA line in Fig. 11.
[Figure 13] Fig. 13 is a perspective view showing a state of coupling the first jigs shown in Fig. 1 with the second jigs.
[Figure 14] Fig. 14 is a perspective view showing a state of removing upward the coupled first jigs and the second jigs shown in Fig. 13.
[Figure 15] Fig. 15 is a cross-sectional view showing a connected portion of the thin first pipe and the second pipe viewed in a direction indicated with an arrow DC in Fig. 4.
[Figure 16] Fig. 16 is a perspective view showing a state of maintaining a connected state of the thick first pipe and the second pipe shown in Fig. 14 by use of a stopper ring.

### Best Mode for Carrying Out the Invention

The object of providing a structure and a method for connecting pipes of a heat exchanger configured not to leave jigs after connection has been realized by a structure for connecting pipes of a heat exchanger configured to connect second pipes for circulating a fluid from a rear side to a plurality of first pipes formed backward in a heat exchanger or a plurality of first pipes formed in and around the heat exchanger, in which groups of the first pipes are arranged along a vertical direction in units of specified quantities (including a single unit) and formed not to be overlapped with each other in a lateral direction of a vehicle.

Now, an embodiment of the present invention will be explained below based on the drawings. In the following description of the drawings, identical or similar constituents are designated by identical or similar reference numerals.

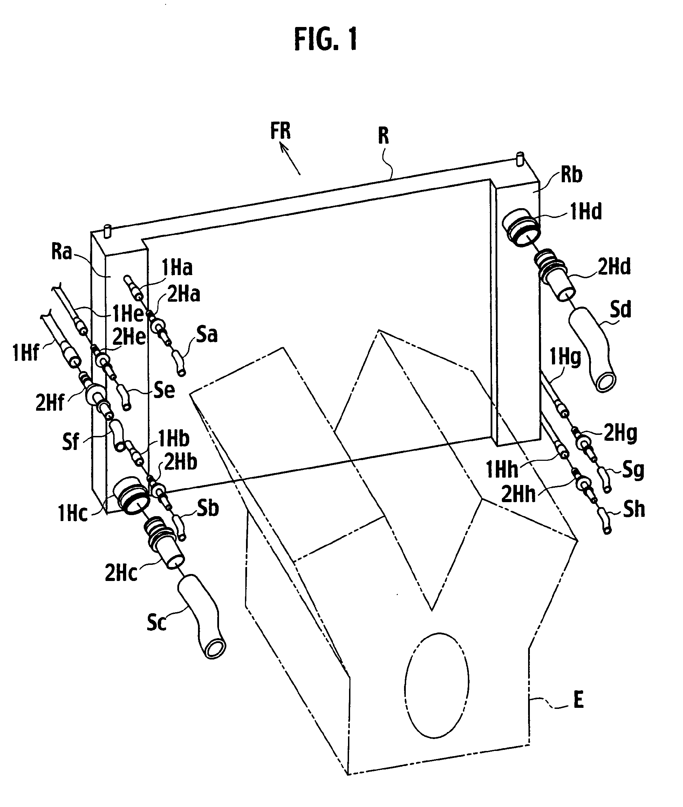

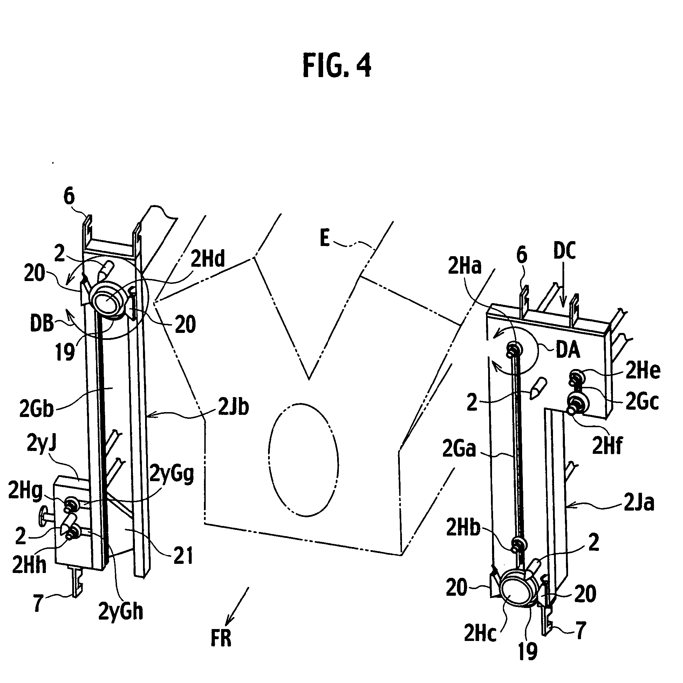

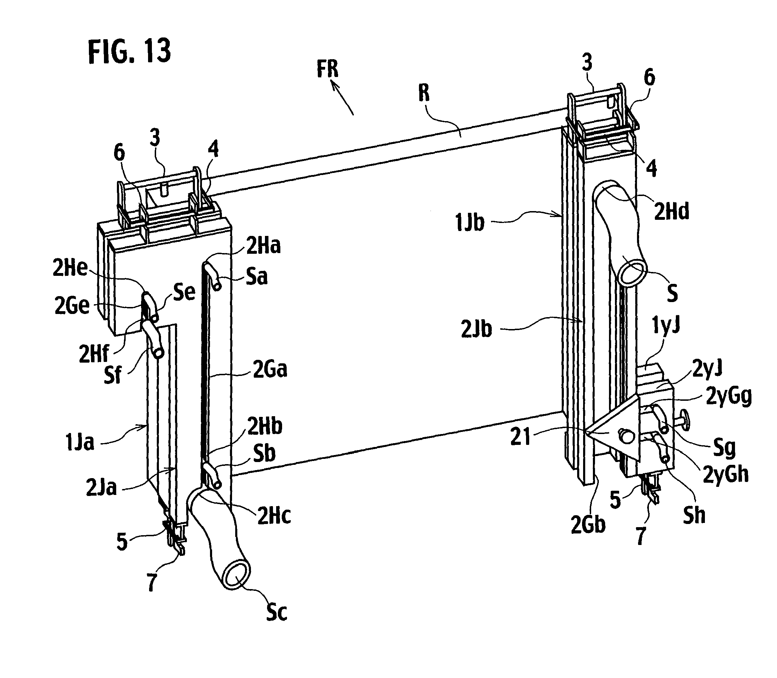

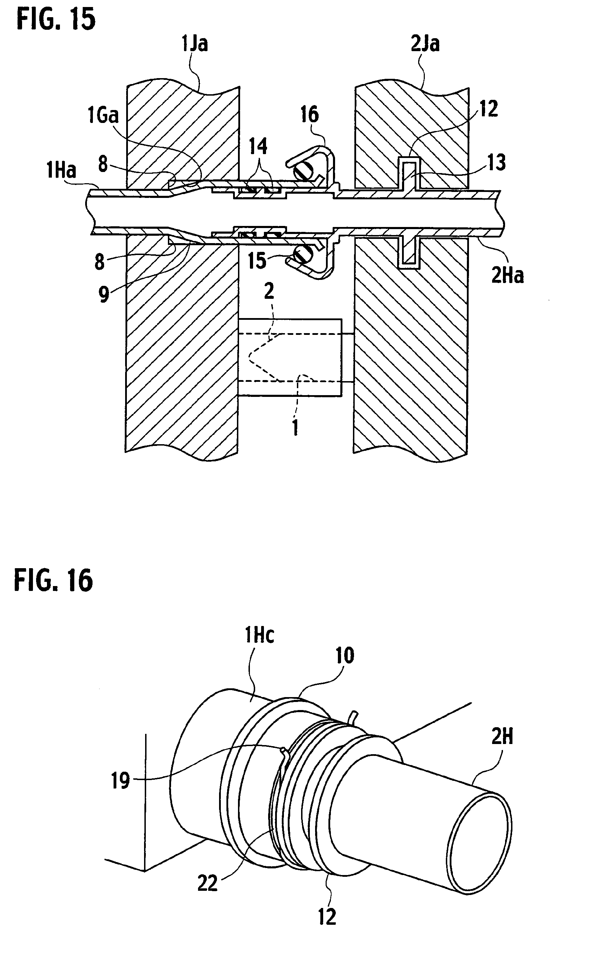

Fig. 1 to Fig. 16 are views showing the embodiment of the present invention. In the drawings, FR means a front side of an automobile. An engine E is installed in an engine room of the automobile, and a radiator R functioning as a "heat exchanger" is disposed in the front thereof. The radiator R includes tank units Ra and Rb on both sides in a lateral direction of the vehicle.

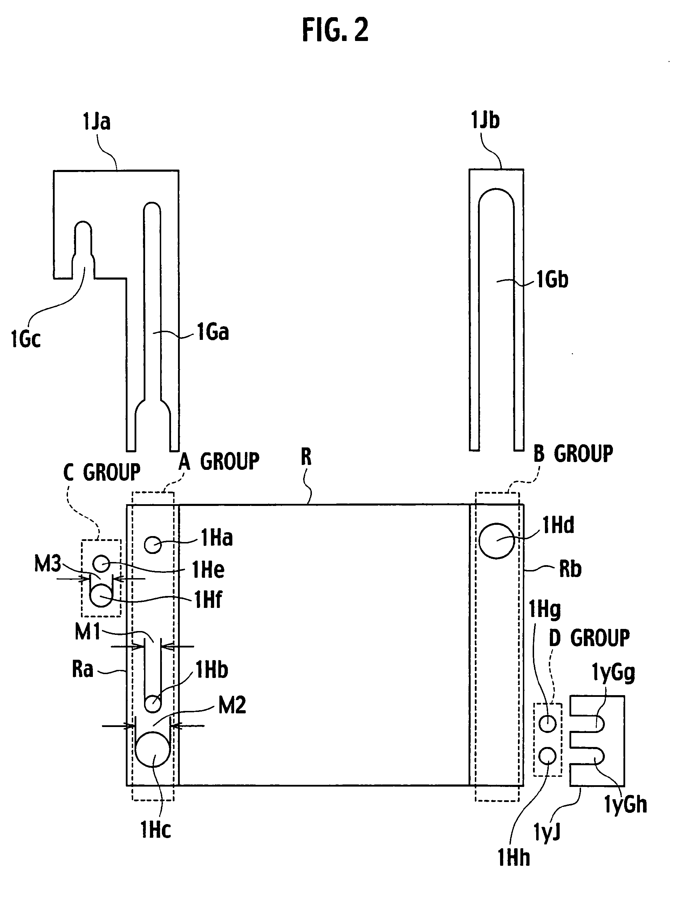

As shown in Fig. 2, a first pipe 1Ha for an A/T oil cooler (IN) is formed backward on an upper part of the left tank unit Ra of the radiator R, and a first pipe 1Hb for the A/T oil cooler (OUT) is formed on a lower part thereof. Moreover, a first pipe 1Hc for RAD cooling water (OUT) is formed on the lowermost part of the left tank unit Ra. The first pipes 1Ha and 1Hb for the A/T oil cooler (IN and OUT) have the same diameter which is thinner than the first pipe 1Hc. The first pipe 1Hc for the RAD cooling water (OUT) has a thicker diameter than the first pipes 1Ha and 1Hb.

The first pipes 1Ha, 1Hb, and 1Hc on the left tank unit Ra are arranged linearly in a vertical direction and collectively constitute a group A. Since the upper two first pipes 1Ha and 1Hb have the same diameter, the upper first pipe 1Ha is located within a diametrical width range M1 of the lower first pipe 1Hb in the lateral direction of the vehicle. Regarding the lower two pipes, the upper first pipe 1Hb is located within a diametrical width range M2 of the lower first pipe 1Hc because the lower first pipe 1Hc has a larger diameter.

A first pipe 1Hd for the RAD cooling water (IN) is formed on the right tank unit Rb. The first pipe 1Hd has the same diameter as the first pipe 1Hc for the RAD cooling water (OUT) on the left tank unit Ra. On the right tank unit Rb, the single first pipe 1Hd for the RAD cooling water (IN) constitutes a group B.

A first pipe 1He for an A/C coolant (IN) and a first pipe 1Hf for the A/C coolant (OUT) for circulating a coolant in an air-conditioning condenser (not shown) are located around the upper part of the left tank unit Ra. The first pipes 1He and 1Hf for the A/C coolant (OUT and IN) are arranged linearly in the vertical direction and collectively constitute a group C. Since the lower first pipe 1Hf has a larger diameter than the upper first pipe 1He, the upper first pipe 1He is located within a diametrical width range M3 of the lower first pipe 1Hf.

A first pipe 1Hg for a P/S oil cooler (IN) for power steering and a first pipe 1Hh for the P/S oil cooler (OUT) are arranged linearly in the vertical direction around a lower part of the right tank unit Rb and collectively constitute a group D. Both of the first pipes 1Hg and 1Hh have the same diameter. The group D has a different feature from other groups A to C and it is not necessary to arrange the pipes strictly linearly in the vertical direction. That is, the upper first pipe 1Hg does not have to be located within a diametrical width range of the lower first pipe 1Hh. Moreover, at least among each of the groups A to C, it is important that the first pipes 1Ha to 1Hf are not overlapped in the lateral direction of the vehicle. The pipes are required to be separated from one another in the lateral direction of the vehicle.

Corresponding second pipes 2Ha to 2Hh are respectively connected from the backside to the first pipes 1Ha to 1Hh in and around the radiator R. Hoses Sa to Sh are respectively connected to the second pipes 2Ha to 2Hh in advance.

First jigs 1Ja and 1Jb, second jigs 2Ja and 2Jb, and a first auxiliary jig 1yJ and a second auxiliary jig 2yJ are respectively used for connecting the first pipes 1Ha to 1Hh to the second pipes 2Ha to 2Hh. The first jigs 1Ja and 1Jb and the second jigs 2Ja and 2Jb are each formed into right-and-left pair structures which are separated in the lateral direction of the vehicle.

Two first guide grooves 1Ga and 1Gc are formed upward from a low end of the left first jig 1Ja so as to correspond to the groups A and C. Widths of the first guide grooves 1Ga and 1Gc conform to the diameters of the corresponding first pipes 1Ha, 1Hb, 1Hc, 1He, and 1Hf . Therefore, the first guide grooves 1Ga and 1Gc of the left first jig 1Ja have lower parts which are enlarged in response to the diameters of the corresponding first pipes 1Hc and 1Hf.

One first guide groove 1Gb is formed upward from a low end of the right first jig 1Jb so as to correspond to the group B. This first guide groove 1Gb is formed widely on the whole in response to the diameter of the corresponding first pipe 1Hd.

Meanwhile, second guide grooves 2Ga, 2Gb, and 2Gc which are similar to the first guide grooves 1Ga, 1Gb, and 1Gc of the first jigs 1Ja and 1Jb are also formed on the left second jig 2Ja and on the right second jig 2Jb, respectively.

First auxiliary guide grooves 1yGg and 1yGh and second auxiliary guide grooves 2yGg and 2yGh respectively having widths to conform to the diameters of the corresponding first pipes 1Hg and 1Hh and the second pipes 2Hg and 2Hh are formed vertically in two lines from left ends toward right ends of the first auxiliary jig 1yJ and the second auxiliary jig 2yJ.

Moreover, cylindrical locating holes 1 serving as engagement structures are respectively formed on upper and lower parts of the left first jig 1Ja, on an upper part of the right first jig 1Jb, and on the first auxiliary jig 1yJ. Locating pins 2 serving as the engagement structures are formed in corresponding positions on upper and lower parts of the left second jig 2Ja, on an upper part of the right second jig 2Jb, and on the second auxiliary jig 2yJ.

Grip portions 3 and frame portions 4 are respectively formed on both of upper ends of the first jigs 1Ja and 1Jb. Ring portions 5 are respectively formed on a lower end of the left first jig 1Ja and on a lower end of the first auxiliary jig 1yJ.

Hook portions 6 and 7 are respectively formed on both of upper ends of the second jigs 2Ja and 2Jb, on a lower end of the left second jig 2Ja, and on a lower end of the second auxiliary jig 2yJ.

Next, actual operations to connect the first pipes 1Ha to 1Hh to the second pipes 2Ha to 2Hh will be described.

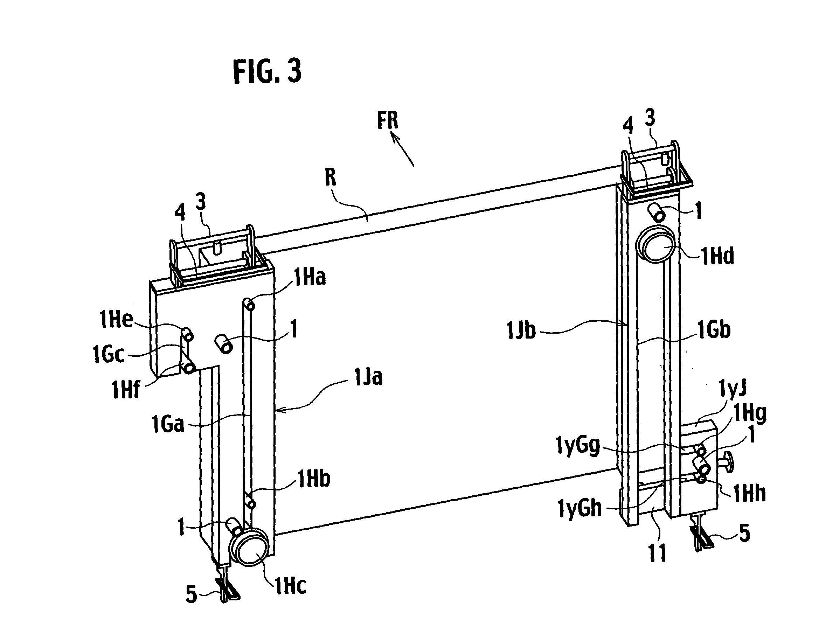

First, as shown in Fig. 3, the left first jig 1Ja is set on the first pipes 1Ha, 1Hb, 1Hc, 1He, and 1Hf of the groups A and C on the left side of the radiator R. The first pipes 1Ha, 1Hb, 1Hc, 1He, and 1Hf of the groups A and C are inserted into the corresponding first guide grooves 1Ga and 1Gc in an internally contacting manner. Therefore, the positions of the first pipes 1Ha, 1Hb, 1Hc, 1He, and 1Hf in the lateral direction of the vehicle are determined by the first guide grooves 1Ga and 1Gc. That is, the first pipes 1Ha, 1Hb, 1Hc, 1He, and 1Hf move integrally with the left first jig 1Ja in the lateral direction of the vehicle.

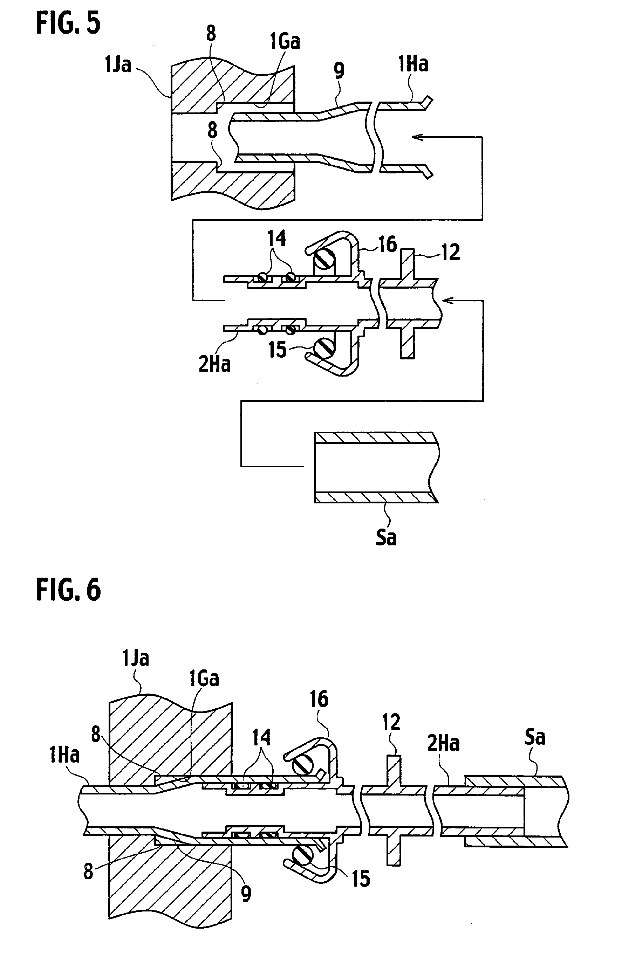

Step portions 8 are formed on inner walls of the thin parts in the first guide grooves 1Ga and 1Gc of the left first jig 1Ja as shown in Fig. 5 and Fig. 6. Slope portions 9 which are tapered forward are formed on the thin first pipes 1Ha, 1Hb, 1He, and 1Hf corresponding to the first guide grooves 1Ga and 1Gc. By placing the slope portions 9 against the step portions 8, forward movement of the first pipes 1Ha, 1Hb, 1He, and 1Hf relative to the first guide grooves 1Ga and 1Gc is restricted.

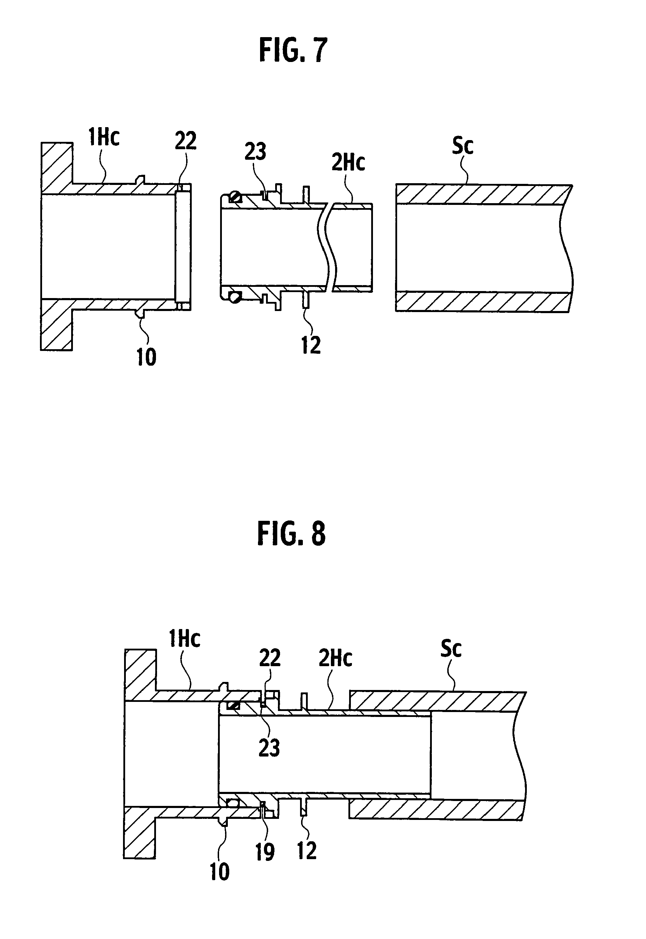

Moreover, as shown in Fig. 7 and Fig. 8, an annular projection 10 to abut on a rear face of the first jig 1Ja is formed on an outer surface of the thick first pipe 1Hc, and forward relative movement of the thick first pipe 1Hc is also restricted by the annular projection 10. These step portions 8, slope portions 9, and annular projection 10 collectively constitute "first restricting means". The annular projection 10 is similarly provided on the thick first pipe 1Hd on the right side.

Moreover, as shown in Fig. 3, the right first jig 1Jb is set on the first pipe 1Hd of the group B on the right side of the radiator R. The first pipe 1Hd of the group B is inserted into an upper end portion of the corresponding first guide groove 1Gb in an internally contacting manner.

Further, the first auxiliary jig 1yJ is also set on the first pipes 1Hg and 1Hh of the group D. The first pipes 1Hg and 1Hh of the group D are inserted into the first auxiliary guide grooves 1yGg and 1yGh of the first auxiliary jig 1yJ. The first auxiliary jig 1yJ is fixed to the right first jig 1Jb by use of a fastener 11.

Next, the various second pipes 2Ha to 2Hf are set inside the second guide grooves 2Ga, 2Gb, and 2Gc of the second jigs 2Ja and 2Jb. The second pipes 2Ha to 2Hf internally contact the second guide grooves 2Ga, 2Gb, and 2Gc in the lateral direction of the vehicle and their positions in the lateral direction of the vehicle are determined. That is, the second pipes 2Ha to 2Hf move integrally with the second jigs 2Ja and 2Jb in the lateral direction of the vehicle.

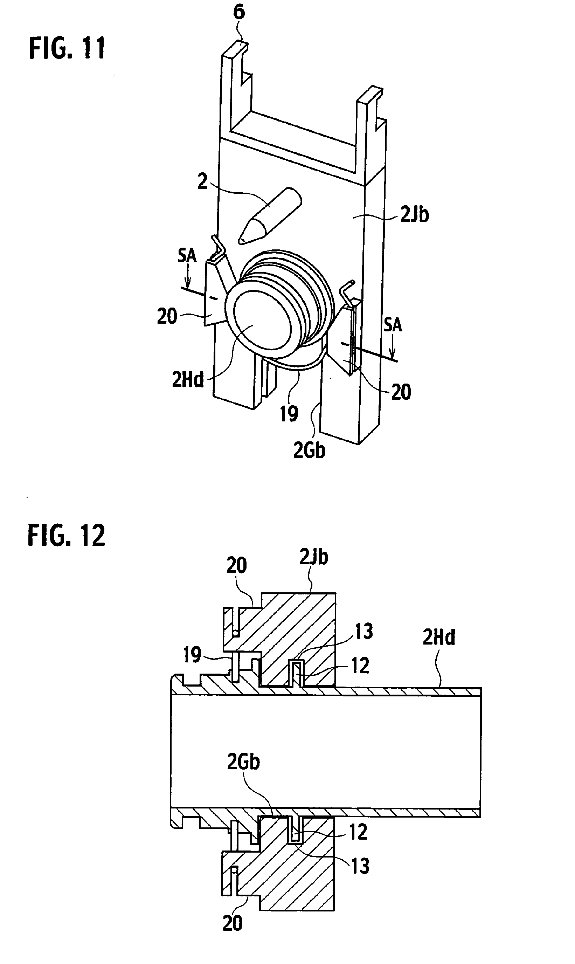

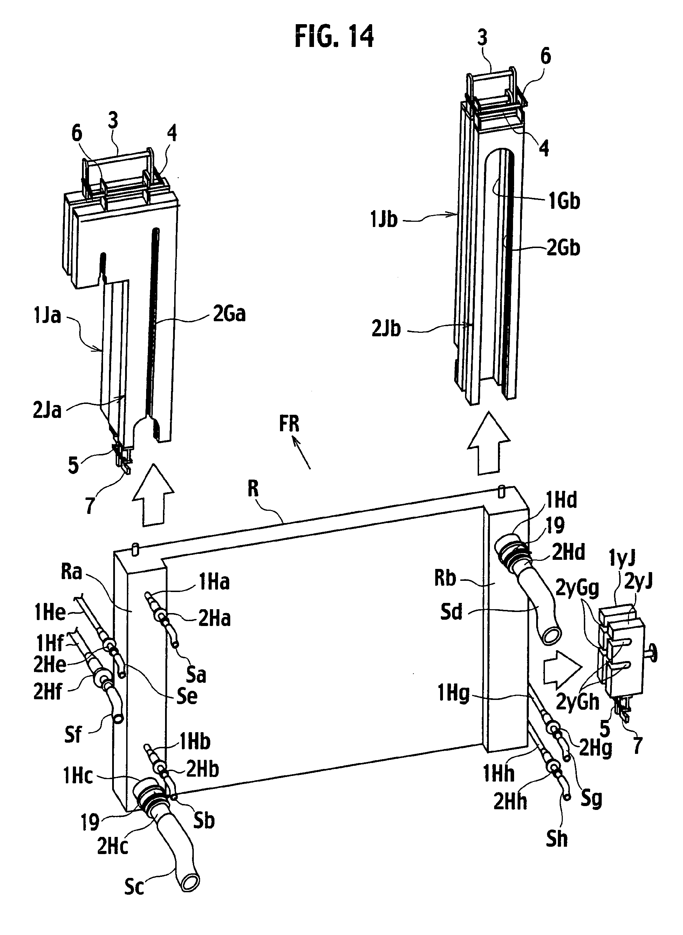

As shown in Fig. 12 and Fig. 14, flanges 12 are respectively formed on outer surfaces of the second pipes 2Ha to 2Hf corresponding to the groups A to C. The flanges 12 are inserted into concave grooves 13 formed on inner surfaces of the second guide grooves 2Ga, 2Gb, and 2Gc of the second jigs 2Ja and 2Jb, and restrict anteroposterior movement of the second pipes 2Ha to 2Hf relative to the second jigs 2Ja and 2Jb.

The flanges 12 and the concave grooves 13 collectively constitute "second restricting means".

Each of the thin second pipes 2Ha, 2Hb, 2He, and 2Hf is provided with two O rings 14 inscribed in a tip of each of the first pipes 1Ha, 1Hb, 1He, and 1Hf, and one O ring 15 which is circumscribed thereabout. The circumscribed O ring 15 is wrapped with a cover 16.

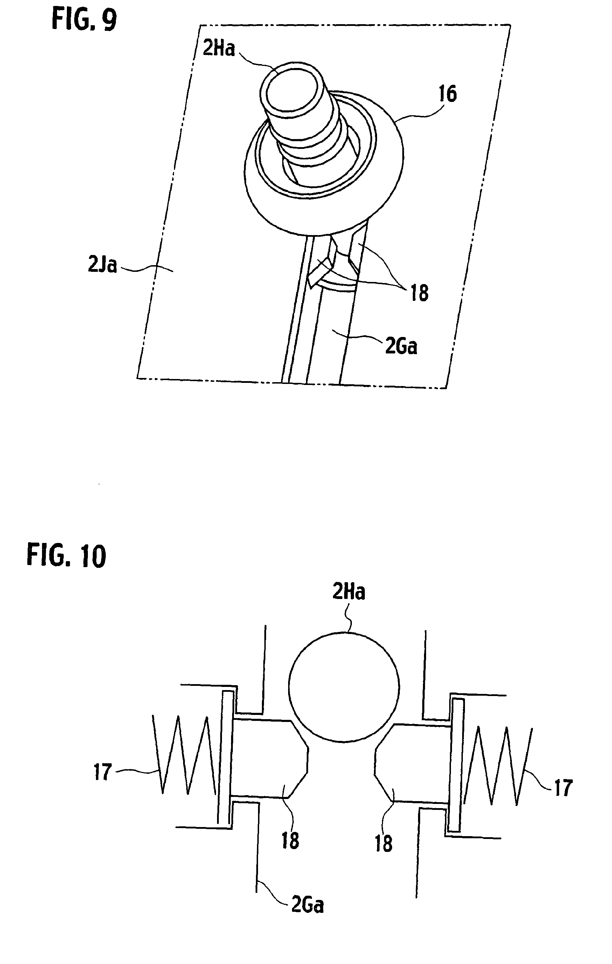

As shown in Fig. 9 and Fig. 10, these thin second pipes 2Ha, 2Hb, 2He, and 2Hf are supported at the bottoms by stopper bodies 18 energized by springs 17 so as to avoid downward movement from predetermined positions in the second guide grooves 2Ga and 2Gc.

Meanwhile, as shown in Fig. 11 and Fig. 12, stopper rings (stopper means) 19 stretched over each of the second guide grooves 2Ga and 2Gb are disposed below the thick second pipes 2Hc and 2Hd. The stopper ring 19 is formed into a C-shape with an opening on an upper side, and both ends thereof are engaged with holders 20 on both ends of each of the second guide grooves 2Ga and 2Gb.

Further, the second auxiliary jig 2yJ is similarly set on the second pipes 2Hg and 2Hh of the group D. The second pipes 2Hg and 2Hh of the group D are inserted into the second auxiliary guide grooves 2yGg and 2yGh of the second auxiliary jig 2yJ. The second auxiliary jig 2yJ is fixed to the right second jig 2Jb by use of a fastener 21.

In this way, the second jigs 2Ja and 2Jb as well as the second auxiliary jig 2yJ which hold the various second pipes 2Ha to 2Hh in the second guide grooves 2Ga, 2G, and 2Gc and in the second auxiliary guide grooves 2yGg and 2yGh are coupled with the first jigs 1Ja and 1Jb as well as the first auxiliary jig 1yJ from the rear side.

Coupling the first jigs 1Ja and 1Jb and so forth with the second jigs 2Ja and 2Jb and so forth is accurately executed by inserting the locating pins 2 into the locating holes 1. Since the first pipes 1Ha to 1Hf have tight positional relations with the second pipes 2Ha to 2Hf in the lateral direction, it is possible to insert the second pipes 2Ha to 2Hf into the first pipes 1Ha to 1Hf securely by performing fine adjustment in the vertical direction. On the contrary, the first pipes 1Hg and 1Hh as well as the second pipes 2Hg and 2Hh located on the first auxiliary jig 1yJ and on the second auxiliary jig 2yJ are subjected to fine adjustment in the lateral direction of the vehicle.

Although the position alignment is achieved by use of the locating pins 2 and the locating holes 1, the first jigs 1Ja and 1Jb and the second jigs 2Ja and 2Jb are each formed as pair structures which are separated in the lateral direction of the vehicle. Accordingly, it is possible to absorb positional fluctuations easily as compared to an integrated structure in the lateral direction of the vehicle.

When coupling the first jigs 1Ja and 1Jb with the second jigs 2Ja and 2Jb, the "first restricting means" including the step portions 8, the slope portions 9, and the annular projection 10 is formed between the first pipes 1Ha to 1Hf and the first guide grooves 1Ga, 1Gb, and 1Gc. Moreover, the "second restricting means" including the flanges 12 and the concave grooves 13 is formed between the second pipes 2Ha to 2Hf and the second guide grooves 2Ga, 2Gb, and 2Gc. Accordingly, the first pipes 1Ha to 1Hf and the second pipes 2Ha to 2Hf are not displaced from the first jigs 1Ja and 1Jb and the second jigs 2Ja and 2Jb in the opposite direction of the coupling direction. Hence it is possible to connect the second pipes 2Ha to 2Hf with the first pipes 1Ha to 1Hf securely.

When coupling the first jigs 1Ja and 1Jb with the second jigs 2Ja and 2Jb, the hooks 6 are engaged with the frame portions 4 at the upper parts while the hooks 7 are engaged with the ring portions 5 at the lower parts. Accordingly, the first jigs 1Ja and 1Jb are integrated with the second jigs 2Ja and 2AJb while the first auxiliary jig 1yJ is integrated with the second auxiliary jig 2yJ.

Then, as shown in Fig. 14, the first jigs 1Ja and 1Jb and the second jigs 2Ja and 2Jb are lifted up by holding the grip portions 3. The first auxiliary jig 1YJ and the second auxiliary jig 2yJ are allowed to move in a horizontal direction by taking off the fasteners 11 and 21. When lifting up the first jigs 1Ja and 1Jb and the second jigs 2Ja and 2Jb, the first pipes 1Ha to 1Hf and the second pipes 2Ha to 2Hf come down relatively inside the first guide grooves 1Ga, 1Gb, and 1Gc and inside the second guide grooves 2Ga, 2Gb, and 2Gc.

The thin second pipes 2Ha, 2Hb, 2He, and 2Hf on the second guide grooves 2Ga and 2Gc are supported from the lower side by the stopper bodies 18. However, the stopper bodies 18 themselves can recede easily by way of the springs 17 and therefore will not be a problem for pulling the first jigs 1Ja and 1Jb and the second jigs 2Ja and 2Jb upward.

By pulling out the first jigs 1Ja and 1Jb and the second jigs 2Ja and 2Jb upward and pulling out the first auxiliary jig 1yJ and the second auxiliary jig 2YJ sideways, the state of secure connection of the respective first pipes 1Ha to 1Hh to the second pipes 2Ha to 2Hh remains in and around the radiator R.

In addition, in the case of connecting the thick first pipes 1Hc and 1Hd for the RAD cooling water (IN and OUT) to the second pipes 2Hc and 2Hd, the second pipes 2Hc and 2Hd hook and detach the stopper rings 19 from the holders 20 when relatively moving downward inside the second guide grooves 2Ga and 2Gb, and part of the stopper rings are directly fitted into circumferential grooves 23 of the second pipes 2Hc and 2Hd through slit grooves 22 formed on side surfaces of the first pipes 1Hc and 1Hd. Accordingly, the state of connection of the thick first pipes 1Hc and 1Hd to the second pipes 2Hc and 2Hd is automatically maintained by the stopper rings 19.

As described above, after connecting the first pipes 1Ha to 1Hh to the second pipes 2Ha to 2Hh, it is possible to remove the first jigs 1Ja and 1Jb, the second jigs 2Ja and 2Jb, and the like by pulling them upward, and so forth. Accordingly, no jigs are left around the radiator R. Therefore, the structure around the radiator R becomes clear and an increase in the weight is not incurred.

In the embodiment, the first jigs 1Ja and 1Jb are coupled with the second jigs 2Ja and 2Jb by use of the locating pins 2 and the locating holes 1. However, it is possible to carry out the coupling without the locating pins 2 and the locating holes 1. The first pipes 1Hg and 1Hh of the group D are connected to the second pipes 2Hg and 2Hg by use of the first auxiliary jig 1yJ and the second auxiliary jig 2yJ apart from the first jigs 1Ja and 1Jb and the second jigs 2Ja and 2Jb. However, as similar to that in the case of the group C, it is possible to use the method of pulling the jigs upward in the case of the group D as well, by forming structures integrated with the first jig 1Jb and the second jig 2Jb.

Although the present invention has been described above with reference to the embodiment, the present invention shall not be limited only to the foregoing embodiment. Configurations of each of the constituents may be replaced by any arbitrary configurations having similar functions.

### Industrial Applicability

According to the present invention, it is possible to provide a structure and a method for connecting pipes to a heat exchanger configured not to leave jigs after connection.

## Claims

1. A structure for connecting pipes of a heat exchanger comprising:
a heat exchanger;
a plurality of first pipes formed in the heat exchanger or in and around the heat exchanger and arranged along a vertical direction in units of specified quantities to constitute respective groups; and
second pipes connected to the first pipes and configured to circulate a fluid,
wherein the groups are formed not to be overlapped with each other in a lateral direction of a vehicle.

2. The structure for connecting pipes of a heat exchanger according to claim 1,
wherein the upper first pipe among the first pipes mutually adjacent to one another in each of the groups is located within a diametrical width range of the lower first pipe in the lateral direction of a vehicle.

3. The structure for connecting pipes of a heat exchanger according to claim 1, further comprising:
a first jig and a second jig to be coupled together, the jigs being used at the time of connecting the pipes of the heat exchanger and removed after connecting the pipes,
wherein the first jig includes a first guide groove being formed upward from a low end of the jig and corresponding to the first pipes of each of the groups, and
the second jig includes a second guide groove being formed upward from a low end of the jig and corresponding to the second pipes of each of the groups.

4. The structure for connecting pipes of a heat exchanger according to claim 3,
wherein the first jig and the second jig include an engagement structure comprising a locating pin and a locating hole formed on mutually opposed surfaces of the jigs, and
the locating pin is inserted into the locating hole in the state of coupling the first jig and the second jig together.

5. The structure for connecting pipes of a heat exchanger according to claim 3,
wherein a first restricting means for restricting relative movement of the first pipes relative to the first jig at least in the opposite direction to the second jig is provided between the first jig and the first pipes.

6. The structure for connecting pipes of a heat exchanger according to claim 3,
wherein a second restricting means for restricting relative movement of the second pipes relative to the second jig at least in the opposite direction to the first jig is provided between the second jig and the second pipes.

7. The structure for connecting pipes of a heat exchanger according to claim 3,
wherein a stopper means for maintaining a connected state of the first pipes and the second pipes is provided on the second guide grooves so as to be set below the corresponding second pipes.

8. A method for connecting pipes of a heat exchanger configured to connect a plurality of first pipes formed in a heat exchanger or in and around the heat exchanger respectively to second pipes for circulating a fluid, the method comprising the steps of:
forming groups of the first pipes arranged along a vertical direction in units of specified quantities in the state of being not overlapped with each other in a lateral direction of a vehicle;
forming upward first guide grooves corresponding to the first pipes of the respective groups from low ends of a pair of first jigs separated in the lateral direction of the vehicle and forming backward any of locating pins and locating holes on the first jigs;
forming upward second guide grooves corresponding to the second pipes of the respective groups from low ends of a pair of second jigs separated in the lateral direction of the vehicle and forming the counterparts of any of the locating pins and the locating holes on the second jigs; and
connecting the second pipes to the first pipes by holding the first pipes of the corresponding group inside the first guide grooves in an internally contacting manner while holding the second pipes of the corresponding group inside the second guide grooves in an internally contacting manner and coupling the second jigs with the first jigs in an anteroposterior direction while inserting the locating pins into the locating holes.

9. The method for connecting pipes of a heat exchanger according to claim 8,
wherein the step of forming groups comprises the step of locating the upper first pipe among the first pipes mutually adjacent to one another in each of the groups within a diametrical width range of the lower first pipe in the lateral direction of a vehicle.

10. The method for connecting pipes of a heat exchanger according to claim 8, further comprising the step of:
providing a first restricting means between the first jig and the first pipes for restricting movement of the first pipes relative to the first jig at least in the opposite direction to the second jig.

11. The method for connecting pipes of a heat exchanger according to claim 8, further comprising the step of:
providing a second restricting means between the second jig and the second pipes for restricting movement of the second pipes relative to the second jig at least in the opposite direction to the first jig.

12. The method for connecting pipes of a heat exchanger according to claim 8, further comprising the step of:
providing a stopper means for maintaining a connected state of the first pipes and the second pipes on the second guide groove to be set below the corresponding second pipe.

13. The method for connecting pipes of a heat exchanger according to claim 8,
wherein the step of detaching the first jigs and the second jigs from the first pipes and the second pipes which are in the state of coupling in the anteroposterior direction, by pulling the jigs upward is executed after the step of connecting the second pipes to the first pipes.
